# EUROPEAN PATENT SPECIFICATION

(11) **EP 3 751 694 B1**
(45) Date of publication and mention of the grant of the patent: **02.10.2024**
(21) Application number: 18904889.5
(22) Date of filing: 10.08.2018
(51) Int. Cl.: H02J 7/00, B60L 50/50, B60L 53/62, B60L 53/66

(54) **ELECTRIC VEHICLE CHARGING CONTROL DEVICE AND METHOD**
AUFLADESTEUERUNGSSYSTEM UND VERFAHREN FÜR EIN ELEKTROFAHRZEUG
DISPOSITIF ET PROCÉDÉ DE COMMANDE DE CHARGE POUR UN VÉHICULE ÉLECTRIQUE

(30) Priority: 09.02.2018 CN 201810134261
(43) Date of publication of application: 16.12.2020
(73) Proprietor: NIO (ANHUI) HOLDING CO., LTD, Economic and Technological Development Zone Hefei Anhui 230601 (CN)
(72) Inventor: ZHANG, Wei, Shanghai 201804 (CN); ZHU, Wenbin, Shanghai 201804 (CN); WU, Guangtao, Shanghai 201804 (CN)
(74) Representative: reuteler & cie SA
(86) International application number: PCT/CN2018/100027
(87) International publication number: WO 2019/153686

(56) References cited:
- CN-A- 103 390 924
- CN-A- 106 340 928
- CN-U- 202 050 256
- CN-U- 204 167 971
- US-A1- 2015 123 613
- US-A1- 2015 165 917
- US-A1- 2015 326 040
- US-A1- 2016 028 270
- US-A1- 2016 028 270
- US-A1- 2018 001 781
- ( R: "(R) SAE Electric Vehicle Conductive Charge Coupler, SAE Recommended Practice", SAE J1772, REV.MONTH01, 1 August 2001 (2001-08-01), pages 1 - 30, XP055148258

## Description

### Technical Field

The invention relates to the technical field of charging, and in particular to an electric vehicle charging control device and method.

### Background Art

In recent years, the number of electric vehicles continually increases, and charging facilities also urgently need to be developed in collaboration with electric vehicles. Only when the charging facilities are popularized and promoted, can the electric vehicles be better popularized and promoted. In order to solve the problem of the compatibility between a charging pile and an electric vehicle, a charging controller is arranged between the charging pile and the electric vehicle for an existing charging control circuit of the electric vehicle, and is configured to control the charging process of the electric vehicle.

US 2016028270 A1 discloses an apparatus for operating an external manual battery charger having a first AC power input and a DC charging output. The apparatus includes an AC controller configured to adjust at least one power parameter supplied to the AC power input of the external manual battery charger. The power parameter(s) may be any one or more of AC current, AC voltage and AC power. The apparatus further includes a feedback converter configured to monitor at least one charging parameter and to control the AC controller to adjust the one or more power parameters in accordance with the monitored charging parameter or parameters.

US 2015165917 A1 discloses a method, a charge controller, a charger and charging system for charging a battery of an electric vehicle, which can include a) determining a priority for each port where an electric vehicle is connected, b) assigning a maximum available power budget to a port with first priority, c) performing a charge session at the port with the first priority, d) monitoring actual power delivered to the vehicle from the priority port, e) adjusting the power performed, and control over charging is unable to be transferred, thereby leading to a low charging efficiency of the electric vehicle and a poor charging experience of the user. Therefore, how to realize the seamless switching and control of the charging process and abnormal states in real time when the charging control circuit fails, so as to complete the charging process safely and reliably has become an urgent technical problem to be solved.

### Summary of the Invention

The invention for which protection is sought is defined by the independent claim. The dependent claims concern particular embodiments.

The technical problem to be solved by the invention is to provide an electric budget value of the priority port depending on the actual power delivered to the vehicle and f) assigning a remailiing portion of the power budget to the port with the second highest priority, g) if the power budget exceeds a predetermined threshold value, starting or restarting a charge session at the port where the remaining portion of the power budget is assigned, and h) repeating steps e-h.

US2015123613A1 disclose a charger for electric vehicles, comprising at least two power exchange ports for vehicles, each port comprising a data communication connection for at least receiving a power request from a vehicle and a power exchange connection for delivering power to a vehicle; at least one grad connection for receiving electric power; a data comnlunication bus, for communicating the power request from the vehicles to a plurality of autonomously controllable power converters, each for converting power from the grid connection to a suitable level for charging a vehicle; and each of the power converters comprises a data communication device, connected to the data bus, and configured for receiving power requests from vehicles; and configured for indicating its available power via the data bus.

However, when the existing charging control circuit fails, one method is to directly stop charging, and after the fault is removed, a user needs to perform a charging start operation again. Another method is to directly replace a charging control signal regardless of the previous charging control signal, which probably causes a charging discontinuity. Seamless switching is unable to be performed, and control over charging is unable to be transferred, thereby leading to a low charging efficiency of the electric vehicle and a poor charging experience of the user. Therefore, how to realize the seamless switching and control of the charging process and abnormal states in real time when the charging control circuit fails, so as to complete the charging process safely and reliably has become an urgent technical problem to be solved.

### Summary of the Invention

The technical problem to be solved by the invention is to provide an electric vehicle charging control device and method, which can enable a charging pile to quickly obtain control over charging within a specified time and output the same control signal when a charging control circuit fails, so that a charging process is uninterrupted and is not stopped, thereby improving the charging efficiency of an electric vehicle and improving the charging experience of a user.

In order to solve the technical problem above, the invention is as defined in independent system claim 1 and independent method claim 6.

The invention has obvious advantages and beneficial effects as compared with the prior art. By means of the above technical solutions, the electric vehicle charging control device and method of the invention can achieve considerable technical progress and practicality, have a wide range of industrial utility value, and have at least the following advantages.
(1) When a charging control circuit fails, a charging pile is capable of quickly obtaining control over charging within a specified time and outputting the same charging control signal, so that a charging process is uninterrupted and is not stopped, thereby improving the charging efficiency of an electric vehicle.
(2) When the charging control circuit is restored to normal, the charging control circuit can regain the control over charging without affecting the charging process, and output a charging control signal synchronously.
(3) A user only needs to start a charging operation once, the charging pile and the charging control circuit can control the charging process and be switched to each other in the case of an abnormal state in real time and seamlessly, thereby completing the charging process safely and reliably and improving the charging experience of the user.

The description above is only summary of the technical solutions of the invention. In order to understand the technical means of the invention more clearly for implementation according to the contents of the specification, and in order to make the above and other objectives, features and advantages of the invention more apparent and easy to be understood, preferred embodiments are especially taken as examples in conjunction with the accompanying drawings, and the detailed description is as follows.

### Brief Description of the Drawings

FIG. 1 is a schematic diagram of an electric vehicle charging control device according to an embodiment of the invention;
FIG. 2 is a waveform diagram for circuit switching of an electric vehicle charging control device according to an embodiment of the invention; and
FIG. 3 is a schematic diagram of an electric vehicle charging control method according to an embodiment of the invention.

### Description of reference numerals:

| | | | |
|---|---|---|---|
| 1: | Charging control module | 2: | Charging control circuit |
| 3: | Bypass circuit | 4: | First selector switch |
| 5: | Second selector switch | 6: | First control unit |
| 7: | Second control unit | 8: | Higher-level control module |
| 9: | Bypass control unit | | |

### Detailed Description of Embodiments

In order to further illustrate the technical means used to achieve the intended purpose of the invention and the technical effects thereof, specific implementations of an electric vehicle charging control device and method proposed in the invention and the effects thereof are described in detail hereinafter in conjunction with the accompanying drawings and the preferred embodiments.

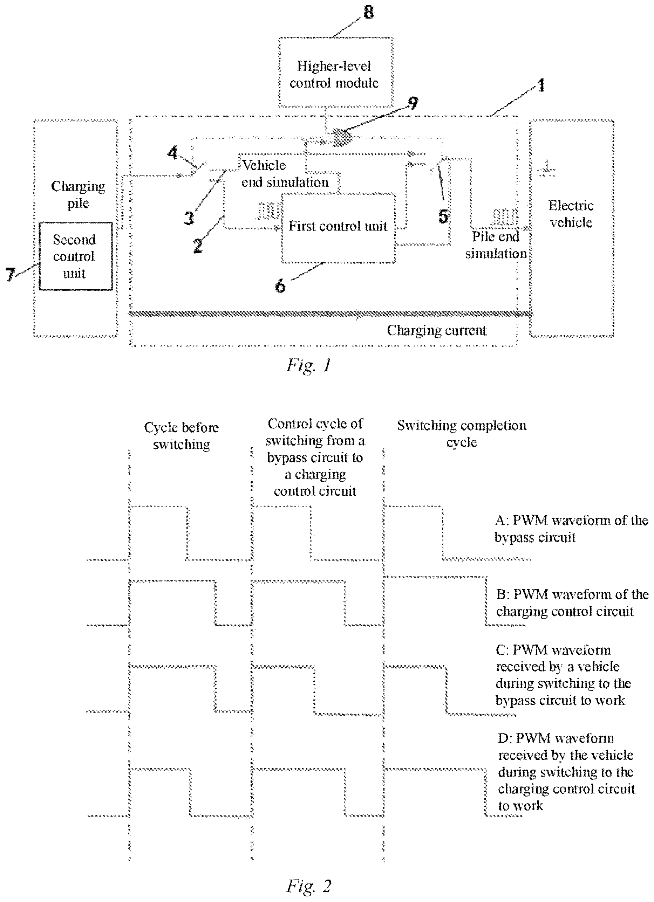

An embodiment of the invention provides an electric vehicle charging control device. As shown in FIG. 1, the charging control device comprises one or more charging control modules 1, one end of each of the charging control modules 1 being connected to a charging pile, and the other end thereof being connected to an electric vehicle. Each of the charging control modules 1 comprises a charging control circuit 2 and a bypass circuit 3, the charging control circuit 2 and the bypass circuit 3 being arranged separately. When the charging control circuit 2 is not in a failure state, the charging control module 1 connects the charging pile to the electric vehicle through the charging control circuit 2, and the charging control circuit 2 controls the charging process of the electric vehicle. When the charging control circuit is in a failure state, the charging control circuit 2 is switched to the bypass circuit 3, and the charging control module 1 controls the circuit 3 to connect the charging pile to the electric vehicle, such that the charging pile controls the charging process of the electric vehicle. Specifically, the charging control circuit 2 is configured to generate and transmit a charging control signal, so as to control the charging process of the electric vehicle. The bypass circuit 3 is configured to directly connect the charging pile to the electric vehicle when the charging control circuit 2 fails, so as to bypass the charging control circuit 2 and transmit the charging control signal to control the charging process of the electric vehicle.

The charging control circuit 2 comprises a first control unit 6 configured to output the charging control signal according to an output of the charging pile and a charging demand of the electric vehicle. The charging pile comprises a second control unit 7 configured to output the charging control signal according to an output of the charging pile and a charging demand of the electric vehicle. It should be noted that the charging control signal generated by the charging control circuit 2 and the charging control signal generated by the charging pile are the same, and therefore seamless switching between the charging control circuit 2 and the bypass circuit 3 can be realized, so that the charging process is uninterrupted, wherein the charging pile may be an AC charging pile.

The charging control module 1 further comprises a first selector switch 4 and a second selector switch 5, wherein the first selector switch 4 is connected to the charging pile and configured to control the charging pile to be connected to one end of the bypass circuit 3 or one end of the charging control circuit 2; and the second selector switch 5 is connected to the electric vehicle and configured to control the electric vehicle to be connected to the other end of the bypass circuit 3 or the other end of the charging control circuit 2. As shown in FIG. 1, as an example, the first selector switch 4 and the second selector switch 5 are both single pole double throw switches. It is assumed that the first selector switch 4 comprises a first connection point 41 and a second connection point 42, wherein the first connection point 41 is located at one end of the charging control circuit 2, and the second connection point 42 is located at one end of the bypass circuit 3. The second selector switch comprises a third connection point 51 and a fourth connection point 52, wherein the third connection point 51 is located at the other end of the charging circuit 2, and the fourth connection point 52 is located at the other end of the bypass circuit 3.

In the example shown in FIG. 1, in a normal charging state: a part of the first control unit 6 that is connected to the charging pile simulates the behavior of the vehicle end, to enable the charging pile to start to work; and a part of the first control unit 6 that is connected to the electric vehicle simulates the behavior of the charging pile, to enable the vehicle to receive charging. The charging control circuit 2 controls the charging process of the electric vehicle. In this case, when the first connection point 41 of the first selector switch 4 is connected and the third connection point 51 of the second selector switch 5 is connected, the charging control circuit 2 is conducted, and the bypass circuit 3 is not conducted. When the charging control circuit 2 fails, controlling by the charging control circuit 2 is switched to controlling by the bypass circuit 3. In this case, the second connection point 42 of the first selector switch 4 is connected, and the fourth connection point 52 of the second selector switch 5 is connected. The bypass circuit 3 is conducted, so that the charging pile is directly connected to the electric vehicle, so as to bypass the charging control circuit 2, and hand over the control over charging to the charging pile.

The device further comprises a higher-level control module 8 communicatively connected to each of the first control units 6 in a wired or wireless manner. The higher-level control module 8 communicates with each of the first control units 6, and is configured to control each of first control units 6 and allocate corresponding power to the first control unit 6. For example, if a total power controlled by the higher-level control module 8 is 900 KW and a total of 30 first control units 6 are connected, then the higher-level control module 8 reasonably allocates power according to the power demand of each of the first control units 6 and the total power, to satisfy the power demand of each of the first control units 6.

The device further comprises one or more bypass control units 9, each of the first control units 6 corresponding to one bypass control unit 9. The bypass control unit 9 comprises two input ends and one output end, one input end being connected to the higher-level control module 8, and the other input end being connected to the first control unit 6. The higher-level control module 8 and/or the first control unit 6 controls/control conduction of the bypass control unit 9, that is, the bypass control unit 9 can be conducted by sending a conduction signal to the bypass control unit by any one of the higher-level control module 8 and the first control unit 6. The output end of the bypass control unit 9 is connected to both ends of the bypass circuit 3 and configured to control on/off of the bypass circuit 3. Specifically, after the bypass control unit 9 is conducted, switch switching signals are sent to the first selector switch 4 and the second selector switch 5, so that the first selector switch 4 switches between the first connection point 1 and the second connection point 42, and the second selector switch 5 switches between the third connection point 51 and the fourth connection point 52.

In the example shown in FIG. 1, the bypass control unit 9 comprises a logic OR gate, two input ends of the logic OR gate being respectively connected to the higher-level control module 8 and the first control unit 6, and the higher-level control module 8 and/or the first control unit 6 controlling the logic OR gate to be conducted by sending a conduction signal to the logic OR gate.

The first control unit 6 comprises a timer, a detection unit, and a switching unit, wherein the timer is connected to the electric vehicle, and is configured to acquire a pulse width modulation (PWM) waveform and a PWM cycle currently received by the vehicle. When the electric vehicle is controlled by the charging control circuit 2, the PWM waveform currently received by the vehicle is synchronized with a PWM waveform output by the first control unit 6, and when the electric vehicle is controlled by the bypass circuit 3, the PWM waveform currently received by the vehicle is synchronized with a PWM waveform output by the bypass circuit 3. The detection unit is configured to detect a falling edge of the PWM waveform received by the vehicle when there is a need for circuit switching, and generate a circuit switching signal when the falling edge is reached, such that the first control unit 6 enters a to-be-switched state. The switching unit is configured to detect whether the current PWM cycle received by the vehicle ends, and generate an interrupt signal if the cycle ends, so as to complete switching from the charging control circuit 2 to the bypass circuit 3 or from the bypass circuit 3 to the charging control circuit 2. As an example, the first control unit 6 comprises a single-chip microcomputer or an ARM, which is used as a measurement and control unit and cooperates with a hardware circuit to implement the functions such as PWM cycle measurement, cycle end/interruption, bypass on/off, and the like implemented by the timer, the detection unit, and the switching unit.

When the charging control circuit 2 fails, the first control unit 6 and the higher-level control module 8 preferentially switch to the bypass circuit through a logic OR gate circuit, so as to ensure the continuity of the charging process. When the charging control circuit 2 is restored to normal, the higher-level control module 8 is first notified to release the control over a bypass, and turn off the partially conducted bypass circuit of the higher-level control module 8, then handover of the charging control signal of the vehicle to the charging control circuit 2 is completed within one cycle, and the bypass circuit 3 is turned off, so as to implement redundancy protection of the first control unit 6 and the higher-level control module 8. There are various fault conditions of the charging control circuit 2. For example, a working state of the first control unit 6 is abnormal, the first control unit 6 loses communication with the higher-level control module 8, a working state of the higher-level control module 8 is abnormal, and the higher-level control module 8 is incapable of communicating with the lower-level first control unit 6.

Specifically, when the working state of the first control unit 6 is abnormal or loses communication with the higher-level control module 8, the higher-level control module 8 controls, through the logic OR gate, the bypass circuit to be conducted, so that the control over charging is handed over to the charging pile, thereby ensuring completeness of the control signal. When the working state of the first control unit 6 is normal, or the higher-level control module 8 is in an abnormal working state, or loses communication with the lower-level first control unit 6, the first control unit 6 controls, through the logic OR gate, the bypass circuit to be conducted, so that the control over charging is handed over to the charging pile, thereby ensuring completeness of the control signal.

When the working states of the first control unit 6 and the higher-level control module 8 are restored to normal, an upstream sub-control station is first allowed to release the control over the bypass circuit. The first control unit 6 synchronizes the PWM control signal of the AC charging pile through a sampling and counting method, so that the control over the charging process by the first control unit 6 is completed within one PWM cycle, and the bypass circuit is cut off at the same time.

As shown in FIG. 2, a waveform A is a PWM waveform output by the bypass circuit, and a waveform B is a PWM waveform output by the charging control circuit 2.

A waveform C is a waveform for switching from a normal working state to a bypass working state, that is, a waveform diagram for switching from controlling by the charging control circuit 2 to controlling by the charging pile, which is specifically as follows: In a cycle before the switching, a PWM cycle length is acquired, and a timer is started to record a running time of the current cycle. When the detection unit detects that the falling edge of the cycle before the switching is reached, a circuit switching signal is generated, such that the first control unit 6 starts to prepare for the switching and enters a to-be-switched state. When the switching unit detects that the current PWM cycle received by the vehicle ends, an interrupt signal is generated, so that the charging control circuit 2 is switched to the bypass circuit 3, and the bypass circuit 3 starts to work.

A waveform D is a waveform for switching from the bypass working state to the normal working state, which is specifically as follows: In a cycle before the switching, a PWM cycle length is acquired, and a timer is started to record a running time of the current cycle. When the detection unit detects that the falling edge of the cycle before the switching is reached, a circuit switching signal is generated, such that the first control unit 6 starts to prepare for the switching and enters a to-be-switched state. When the switching unit detects that the current PWM cycle received by the vehicle ends, an interrupt signal is generated, so that the bypass circuit 3 is switched to the charging control circuit 2, and the charging control circuit 2 starts to work.

According to the device of the embodiment of the invention, when a charging control circuit fails, a charging pile is capable of quickly obtaining control over charging within a specified time and outputting the same charging control signal, so that a charging process is uninterrupted and is not stopped, thereby improving the charging efficiency of an electric vehicle. When the charging control circuit is restored to normal, the charging control circuit can regain the control over charging without affecting the charging process, and output a charging control signal synchronously. In addition, through the device, a user only needs to start a charging operation once, the charging pile and the charging control circuit can control the charging process and be switched to each other in the case of an abnormal state in real time and seamlessly, thereby completing the charging process safely and reliably and improving the charging experience of the user.

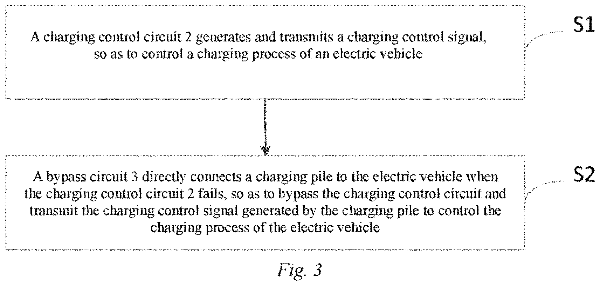

An embodiment of the invention further provides an electric vehicle charging control method. As shown in FIG. 3, the electric vehicle charging control method may be implemented based on the device shown in FIG. 1, and comprises the following steps:
Step S1: generating and transmitting, by a charging control circuit 2, a charging control signal, so as to control a charging process of an electric vehicle.
Step S1 comprises step S11: outputting, by the charging control circuit 2, the charging control signal according to an output of the charging pile and a charging demand of the electric vehicle, to control the charging of the electric vehicle.
Step S2: directly connecting, by a bypass circuit 3, the charging pile to the electric vehicle when the charging control circuit 2 fails, so as to bypass the charging control circuit and transmit the charging control signal generated by the charging pile to control the charging process of the electric vehicle.
Step S2 comprises step S21: outputting, by the charging pile, the charging control signal according to an output of the charging pile and a charging demand of the electric vehicle.

It should be noted that the charging control signal generated by the charging control circuit 2 and the charging control signal generated by the charging pile are the same, and therefore seamless switching between the charging control circuit 2 and the bypass circuit 3 can be realized, so that the charging process is uninterrupted, wherein the charging pile may be an AC charging pile.

The method further comprises step S3: a higher-level control module 8 being connected to one or more charging control circuits 2 in a wired or wireless manner, and each of the charging control circuits 2 being allocated with power. For example, if a total power controlled by the higher-level control module 8 is 900 KW and a total of 30 charging control circuits 2 are connected, then the higher-level control module 8 reasonably allocates power according to the power demand of each of the charging control circuits 2 and the total power, to satisfy the power demand of each of the charging control circuits 2.

In step S2, the failure of the charging control circuit comprises: one or more of a working state of the charging control circuit being abnormal, the charging control circuit losing communication with the higher-level control module, a working state of the higher-level control module being abnormal, and the higher-level control module being incapable of communicating with the charging control circuit.

Step S2 may specifically comprise step S22: generating, by the higher-level control module 8, a bypass conduction signal when a working state of the charging control circuit 2 is abnormal or the charging control circuit 2 loses communication with the higher-level control module 8, to control the bypass circuit 3 to be conducted.

Step S22 comprises:
step S221: acquiring a PWM waveform and a PWM cycle currently received by the vehicle;
step S222: detecting a falling edge of the PWM waveform received by the vehicle when there is a need for circuit switching, and generating a circuit switching signal when the falling edge is reached, such that the charging control circuit 2 enters a to-be-switched state; and
step S223: detecting whether the current PWM cycle received by the vehicle ends, and generating an interrupt signal if the cycle ends, so as to complete switching from the charging control circuit 2 to the bypass circuit 3.

Step S2 may specifically comprise step S23: generating, by the charging control circuit 8, a bypass conduction signal when a working state of the higher-level control module 8 is abnormal or the higher-level control module 8 is incapable of communicating with the charging control circuit 2, to control the bypass circuit 3 to be conducted.

Step S23 comprises:
step S231: acquiring a PWM waveform and a PWM cycle currently received by the vehicle;
step S232: detecting a falling edge of the PWM waveform received by the vehicle when there is a need for circuit switching, and generating a circuit switching signal when the falling edge is reached, such that the charging control circuit 2 enters a to-be-switched state; and
step S233: detecting whether the current PWM cycle received by the vehicle ends, and generating an interrupt signal if the cycle ends, so as to complete switching from the charging control circuit 2 to the bypass circuit 3.

As an example, as shown in FIG. 1, steps S22 and S23 may be controlled by providing a logic OR gate in the higher-level control module 8 and the charging control circuit 2. The higher-level control module 8 and/or the charging control circuit 2 control/controls the logic OR gate to be conducted by sending a conduction signal to the logic OR gate, thereby controlling the bypass circuit 3 to be conducted.

The method further comprises step S4: releasing control of the higher-level control module 8 over the bypass circuit when both the charging control circuit 2 and the higher-level control module 8 are restored to normal; and acquiring, by the charging control circuit 2, the control over the charging process within one PWM cycle and cutting off the bypass circuit 3.

Step S4 comprises:
step S41: acquiring a PWM waveform and a PWM cycle currently received by the vehicle;
step S42: detecting a falling edge of the PWM waveform received by the vehicle when there is a need for circuit switching, and generating a circuit switching signal when the falling edge is reached, such that the charging control circuit enters a to-be-switched state; and
step S43: detecting whether the current PWM cycle received by the vehicle ends, and generating an interrupt signal if the cycle ends, so as to complete switching from the bypass circuit to the charging control circuit.

As shown in FIG. 2, a waveform A is a PWM waveform output by the bypass circuit, and a waveform B is a PWM waveform output by the charging control circuit 2.

A waveform C is a waveform for switching from a normal working state to a bypass working state, that is, a waveform diagram for switching from controlling by the charging control circuit 2 to controlling by the charging pile, which is specifically as follows: In a cycle before the switching, a PWM cycle length is acquired, and a timer is started to record a running time of the current cycle. When it is detected that the falling edge of the cycle before the switching is reached, a circuit switching signal is generated, such that the charging control circuit 2 starts to prepare for the switching and enters a to-be-switched state. When it is detected that the current PWM cycle received by the vehicle ends, an interrupt signal is generated, so that the charging control circuit 2 is switched to the bypass circuit 3, and the bypass circuit 3 starts to work.

A waveform D is a waveform for switching from the bypass working state to the normal working state, which is specifically as follows: In a cycle before the switching, a PWM cycle length is acquired, and a timer is started to record a running time of the current cycle. When it is detected that the falling edge of the cycle before the switching is reached, a circuit switching signal is generated, such that the charging control circuit 2 starts to prepare for the switching and enters a to-be-switched state. When it is detected that the current PWM cycle received by the vehicle ends, an interrupt signal is generated, so that the bypass circuit 3 is switched to the charging control circuit 2, and the charging control circuit 2 starts to work.

According to the method of the embodiment of the invention, when a charging control circuit fails, a charging pile is capable of quickly obtaining control over charging within a specified time and outputting the same charging control signal, so that a charging process is uninterrupted and is not stopped, thereby improving the charging efficiency of an electric vehicle. When the charging control circuit is restored to normal, the charging control circuit can regain the control over charging without affecting the charging process, and output a charging control signal synchronously. In addition, according to the method, a user only needs to start a charging operation once, the charging pile and the charging control circuit can control the charging process and be switched to each other in the case of an abnormal state in real time and seamlessly, thereby completing the charging process safely and reliably and improving the charging experience of the user.

An embodiment of the invention further provides a controller, which comprises a memory and a processor, wherein the memory stores a computer program that, when executed by the processor, is capable of implementing the steps of the method.

An embodiment of the invention further provides a computer-readable storage medium for storing a computer instruction that, when executed by a computer or a processor, implements the steps of the method.

The foregoing descriptions are merely preferred embodiments of the invention, and are not intended to limit the invention in any form. Although the invention has been disclosed as above by means of the preferred embodiments, these embodiments are not for the purpose of limiting the invention.

Amendments, equivalent changes and modifications made to the above embodiments according to the technical essence of the invention without departing from the technical solutions of the invention can be contemplated only within the scope of the claims.

## Claims

1. An electric vehicle charging control system, comprising: at least two charging control modules (1), a higher-level control module (8) and at least two bypass control units (9), at least two charging piles, one end of each of the charging control modules (1) being connected to a charging pile and the other end thereof being connectable to an electric vehicle, and
each of the charging control modules (1) comprising a charging control circuit (2) and a bypass circuit (3), the charging control circuit (2) and the bypass circuit (3) being arranged separately, and
the charging control circuit (2) is configured to generate and transmit a charging control signal, so as to control the charging process of the electric vehicle;
**characterized in that** the bypass circuit (3) is configured to directly connect the charging pile to the electric vehicle when the charging control circuit (2) fails, so as to bypass the charging control circuit (2) and transmit the charging control signal generated by the charging pile to control the charging process of the electric vehicle,
the charging control circuit (2) comprises a first control unit (6) configured to output the charging control signal according to an output of the charging pile and a charging demand of the electric vehicle, the charging pile comprises a second control unit (7) configured to output the charging control signal according to an output of the charging pile and a charging demand of the electric vehicle, the charging control signal generated by the charging control circuit (2) and the charging control signal generated by the charging pile are the same,
the higher-level control module (8) is communicatively connected to each of the first control units (6) in a wired or wireless manner and configured to control each of the first control units (6) and allocate corresponding power to the first control unit (6), and
each of the bypass control units (9) comprises two input ends and one output end, one input end being connected to the higher-level control module (8), and the other input end being connected to the first control unit (6), the higher-level control module (8) and/or the first control unit (6) control/controls conduction of the bypass control unit (9), the output end of the bypass control unit (9) is connected to both ends of the bypass circuit (3) and configured to control on/off of the bypass circuit (3), when the charging control circuit (2) fails, the first control unit (6) and the higher-level control module (8) are configured to switch to the bypass circuit (3), so as to ensure the continuity of the charging process; when the charging control circuit (2) is restored to normal, the higher-level control module (8) is first notified to release the control over a bypass, and turn off the partially conducted bypass circuit of the higher-level control module (8), then handover of the charging control signal of the vehicle to the charging control circuit (2) is completed within one cycle, and the bypass circuit (3) is turned off.

2. The electric vehicle charging control system according to claim 1, **characterized in that**
each of the charging control modules (1) further comprises:
a first selector switch (4) connected to the charging pile and configured to control the charging pile to be connected to one end of the bypass circuit (3) or one end of the charging control circuit (2); and
a second selector switch (5) connected to the electric vehicle and configured to control the electric vehicle to be connected to the other end of the bypass circuit (3) or the other end of the charging control circuit (2).

3. The electric vehicle charging control system according to claim 1, **characterized in that**
the first control unit (6) comprises:
a timer connected to the electric vehicle and configured to acquire a PWM waveform and a PWM cycle currently received by the vehicle;
a detection unit configured to detect a falling edge of the PWM waveform received by the vehicle when there is a need for circuit switching, and generate a circuit switching signal when the falling edge is reached, such that the first control unit enters a to-be-switched state; and
a switching unit configured to detect whether the current PWM cycle received by the vehicle ends, and generate an interrupt signal if the cycle ends, so as to complete switching from the charging control circuit (2) to the bypass circuit (3) or from the bypass circuit (3) to the charging control circuit (2).

4. The electric vehicle charging control system according to any one of claims 1 to 4, **characterized in that**
the failure of the charging control circuit (2) comprises: a working state of the first control unit (6) being abnormal, the first control unit (6) losing communication with the higher-level control module (8), a working state of the higher-level control module (8) being abnormal, and the higher-level control module (8) being incapable of communicating with the first control unit (6).

5. The electric vehicle charging control system according to any one of claims 1 to4, **characterized in that**
the charging pile is an AC charging pile.

6. An electric vehicle charging control method, used to control a charging process of the electric vehicle according to the system of any of claim 1-5, comprising the following steps:
generating and transmitting, by a charging control circuit (2), a charging control signal, so as to control the charging process of the electric vehicle; and
directly connecting, by a bypass circuit (3), the charging pile to the electric vehicle when the charging control circuit fails, so as to bypass the charging control circuit (2) and transmit the charging control signal generated by the charging pile to control the charging process of the electric vehicle, the charging control circuit (2) and the bypass circuit (3) being arranged separately,
**characterized in that** the charging control signal generated by the charging control circuit (2) and the charging control signal generated by the charging pile are the same,
the method further comprising the following steps:
generating, by a higher-level control module (8), a bypass conduction signal when the charging control circuit (2) fails, to control the bypass circuit (3) to be conducted, and
generating, by the charging control circuit (2), a bypass conduction signal when the charging control circuit (2) fails, to control the bypass circuit (3) to be conducted, and
turning off the partially conducted bypass circuit of the higher-level control module (8) when the charging control circuit (2) is restored to normal, then handover of the charging control signal of the vehicle to the charging control circuit (2) is completed, and the bypass circuit (3) is turned off.

7. The electric vehicle charging control method according to claim 6, **characterized in that**
said generating and transmitting, by a charging control circuit (2), a charging control signal, so as to control charging of an electric vehicle comprises the following step:
outputting, by the charging control circuit (2), the charging control signal according to an output of the charging pile and a charging demand of the electric vehicle, to control the charging of the electric vehicle.

8. The electric vehicle charging control method according to claim 6, **characterized in that**
said transmitting, by the bypass circuit (3), the charging control signal generated by the charging pile comprises the following step:
outputting, by the charging pile, the charging control signal according to an output of the charging pile and a charging demand of the electric vehicle.

## Patentansprüche

1. System zum Steuern des Ladens eines Elektrofahrzeugs, Folgendes umfassend:
mindestens zwei Module (1) zum Steuern des Ladens, ein Modul (8) zum Steuern auf höherer Ebene und mindestens zwei Umgehungssteuereinheiten (9), mindestens zwei Ladesäulen, wobei ein Ende jedes der Module (1) zum Steuern des Ladens mit einer Ladesäule verbunden ist und das andere Ende derselben mit einem Elektrofahrzeug verbindbar ist, und
wobei jedes der Module (1) zum Steuern des Ladens einen Schaltkreis (2) zum Steuern des Ladens und einen Umgehungsschaltkreis (3) umfasst, wobei der Schaltkreis (2) zum Steuern des Ladens und der Umgehungsschaltkreis (3) getrennt angeordnet sind, und
wobei der Schaltkreis (2) zum Steuern des Ladens dafür konfiguriert ist, ein Signal zum Steuern des Ladens zu erzeugen und zu übertragen, so dass der Ladeprozess des Elektrofahrzeugs gesteuert wird,
**dadurch gekennzeichnet, dass** der Umgehungsschaltkreis (3) dafür konfiguriert ist, die Ladesäule direkt mit dem Elektrofahrzeug zu verbinden, wenn der Schaltkreis (2) zum Steuern des Ladens ausfällt, so dass der Schaltkreis (2) zum Steuern des Ladens umgangen wird und das Signal zum Steuern des Ladens übertragen wird, das durch die Ladesäule erzeugt wird, um den Ladeprozess des Elektrofahrzeugs zu steuern,
wobei der Schaltkreis (2) zum Steuern des Ladens eine erste Steuereinheit (6) umfasst, die dafür konfiguriert ist, das Signal zum Steuern des Ladens gemäß einer Ausgabe der Ladesäule und einem Ladebedarf des Elektrofahrzeugs auszugeben, wobei die Ladesäule eine zweite Steuereinheit (7) umfasst, die dafür konfiguriert ist, das Signal zum Steuern des Ladens gemäß einem Ausgang der Ladesäule und einem Ladebedarf des Elektrofahrzeugs auszugeben, wobei das von dem Schaltkreis (2) zum Steuern des Ladens erzeugte Signal zum Steuern des Ladens und das von der Ladesäule erzeugte Signal zum Steuern des Ladens gleich sind,
wobei das Modul (8) zum Steuern auf höherer Ebene in einer drahtgebundenen oder drahtlosen Weise kommunikationsfähig mit jeder der ersten Steuereinheiten (6) verbunden und dafür konfiguriert ist, jede der ersten Steuereinheiten (6) zu steuern und der ersten Steuereinheit (6) eine entsprechende Leistung zuzuweisen, und
wobei jede der Umgehungssteuereinheiten (9) zwei Eingangsenden und ein Ausgangsende umfasst, wobei ein Eingangsende mit dem Modul (8) zum Steuern auf höherer Ebene verbunden ist und das andere Eingangsende mit der ersten Steuereinheit (6) verbunden ist, das Modul (8) zum Steuern auf höherer Ebene und/oder die erste Steuereinheit (6) das Leiten der Umgehungssteuereinheit (9) steuert/steuern, das Ausgangende der Umgehungssteuereinheit (9) mit beiden Enden des Umgehungsschaltkreises (3) verbunden und dafür konfiguriert ist, das Ein- und Ausschalten des Umgehungsschaltkreises (3) zu steuern, wenn der Schaltkreis (2) zum Steuern des Ladens ausfällt, die erste Steuereinheit (6) und das Modul (8) zum Steuern auf höherer Ebene dafür konfiguriert sind, auf den Umgehungsschaltkreis (3) umzuschalten, um die Kontinuität des Ladeprozesses sicherzustellen; wenn der Schaltkreis (2) zum Steuern des Ladens in den Normalzustand zurückkehrt, wird das Modul (8) zum Steuern auf höherer Ebene zuerst benachrichtigt, um die Steuerung über eine Umgehung aufzuheben und den teilweise leitenden Umgehungsschaltkreis des Moduls (8) zum Steuern auf höherer Ebene auszuschalten, dann ist das Übergeben (Handover) des Signals zum Steuern des Ladens des Fahrzeugs an den Schaltkreis (2) zum Steuern des Ladens innerhalb eines Zyklus abgeschlossen und der Umgehungsschaltkreis (3) wird ausgeschaltet.

2. System zum Steuern des Ladens eines Elektrofahrzeugs nach Anspruch 1, **dadurch gekennzeichnet, dass**
jedes der Module (1) zum Steuern des Ladens ferner Folgendes umfasst:
einen ersten Auswahlschalter (4), der mit der Ladesäule verbunden und dafür konfiguriert ist, die Ladesäule zu steuern, mit einem Ende des Umgehungsschaltkreises (3) oder einem Ende des Schaltkreises (2) zum Steuern des Ladens verbunden zu sein, und
einen zweiten Auswahlschalter (5), der mit dem Elektrofahrzeug verbunden und dafür konfiguriert ist, das Elektrofahrzeug zu steuern, mit dem anderen Ende des Umgehungsschaltkreises (3) oder dem anderen Ende des Schaltkreises (2) zum Steuern des Ladens verbunden zu sein.

3. System zum Steuern des Ladens eines Elektrofahrzeugs nach Anspruch 1, **dadurch gekennzeichnet, dass**
die erste Steuereinheit (6) Folgendes umfasst:
einen Zeitnehmer, der mit dem Elektrofahrzeug verbunden und dafür konfiguriert ist, eine PWM-Wellenform und einen PWM-Zyklus zu erfassen, die gegenwärtig durch das Fahrzeug empfangen werden,
eine Erkennungseinheit, die dafür konfiguriert ist, eine fallende Flanke der PWM-Wellenform zu erkennen, die durch das Fahrzeug empfangen wird, wenn ein Bedarf zum Umschalten des Schaltkreises besteht, und ein Schaltkreisumschaltsignal zu erzeugen, wenn die fallende Flanke erreicht ist, so dass die erste Steuereinheit in einen zu schaltenden Zustand eintritt, und
eine Schalteinheit, die dafür konfiguriert ist, zu erkennen, ob der gegenwärtige PWM-Zyklus von den Fahrzeugenden empfangen wird, und ein Unterbrechungssignal zu erzeugen, wenn der Zyklus endet, so dass das Schalten von dem Schaltkreis (2) zum Steuern des Ladens auf den Umgehungsschaltkreis (3) oder von dem Umgehungsschaltkreis (3) auf den Schaltkreis (2) zum Steuern des Ladens abgeschlossen wird.

4. System zum Steuern des Ladens eines Elektrofahrzeugs nach einem der Ansprüche 1 bis 4, **dadurch gekennzeichnet, dass**
der Ausfall des Schaltkreises (2) zum Steuern des Ladens Folgendes umfasst: einen Arbeitszustand der ersten Steuereinheit (6) ist anomal, die erste Steuereinheit (6) verliert die Kommunikation mit dem Modul (8) zum Steuern auf höherer Ebene, ein Arbeitszustand des Moduls (8) zum Steuern auf höherer Ebene ist anomal und das Modul (8) zum Steuern auf höherer Ebene ist nicht in der Lage, mit der ersten Steuereinheit (6) zu kommunizieren.

5. System zum Steuern des Ladens eines Elektrofahrzeugs nach einem der Ansprüche 1 bis 4, **dadurch gekennzeichnet, dass**
die Ladesäule eine Wechselstrom-Ladesäule ist.

6. Verfahren zum Steuern des Ladens eines Elektrofahrzeugs, das verwendet wird, um einen Ladeprozess des Elektrofahrzeugs gemäß dem System nach einem der Ansprüche 1 bis 5 zu steuern, die folgenden Schritte umfassend:
Erzeugen und Übertragen eines Signals zum Steuern des Ladens durch einen Schaltkreis (2) zum Steuern des Ladens, so dass der Ladeprozess des Elektrofahrzeugs gesteuert wird, und
direktes Verbinden der Ladesäule mit dem Elektrofahrzeug durch einen Umgehungsschaltkreis (3), wenn der Schaltkreis zum Steuern des Ladens ausfällt, so dass der Schaltkreis (2) zum Steuern des Ladens umgangen wird und das Signal zum Steuern des Ladens übertragen wird, das durch die Ladesäule erzeugt wird, um den Ladeprozess des Elektrofahrzeugs zu steuern, wobei der Schaltkreis (2) zum Steuern des Ladens und der Umgehungsschaltkreis (3) getrennt angeordnet sind,
**dadurch gekennzeichnet, dass** das von dem Schaltkreis (2) zum Steuern des Ladens erzeugte Signal zum Steuern des Ladens und das von der Ladesäule erzeugte Signal zum Steuern des Ladens gleich sind,
wobei das Verfahren ferner die folgenden Schritte umfasst:
Erzeugen eines Umgehungsleitsignals durch ein Modul (8) zum Steuern auf höherer Ebene, wenn der Schaltkreis (2) zum Steuern des Ladens ausfällt, um den Umgehungsschaltkreis (3) zum Leiten zu steuern, und
Erzeugen eines Umgehungsleitsignals durch den Schaltkreis (2) zum Steuern des Ladens, wenn der Schaltkreis (2) zum Steuern des Ladens ausfällt, um den Umgehungsschaltkreis (3) zum Leiten zu steuern, und
Ausschaltgen des teilweise leitenden Umgehungsschaltkreises des Moduls (8) zum Steuern auf höherer Ebene, wenn der Schaltkreis (2) zum Steuern des Ladens in den Normalzustand zurückkehrt, dann ist das Übergeben (Handover) des Signals zum Steuern des Ladens des Fahrzeugs an den Schaltkreis (2) zum Steuern des Ladens abgeschlossen und der Umgehungsschaltkreis (3) wird ausgeschaltet.

7. Verfahren zum Steuern des Ladens eines Elektrofahrzeugs nach Anspruch 6, **dadurch gekennzeichnet, dass**
das Erzeugen und Übertragen eines Signals zum Steuern des Ladens durch einen Schaltkreis (2) zum Steuern des Ladens, so dass der Ladeprozess des Elektrofahrzeugs gesteuert wird, den folgenden Schritt umfasst:
Ausgeben des Signals zum Steuern des Ladens durch den Schaltkreis (2) zum Steuern des Ladens gemäß einer Ausgabe der Ladesäule und einem Ladebedarf des Elektrofahrzeugs, um das Laden des Fahrzeugs zu steuern.

8. Verfahren zum Steuern des Ladens eines Elektrofahrzeugs nach Anspruch 6, **dadurch gekennzeichnet, dass**
das Übertragen des von der Ladesäule erzeugten Signals zum Steuern des Ladens durch den Umgehungsschaltkreis (3) den folgenden Schritt umfasst:
Ausgeben des Signals zum Steuern des Ladens durch die Ladesäule gemäß einer Ausgabe der Ladesäule und einem Ladebedarf des Elektrofahrzeugs.

## Revendications

1. Système de commande de charge de véhicule électrique, comprenant : au moins deux modules de commande de charge (1), un module de commande de niveau supérieur (8) et au moins deux unités de commande de dérivation (9), au moins deux piles de charge, une extrémité de chacun des modules de commande de charge (1) étant connectée à une pile de charge et l'autre extrémité de celle-ci pouvant être connectée à un véhicule électrique, et
chacun des modules de commande de charge (1) comprenant un circuit de commande de charge (2) et un circuit de dérivation (3), le circuit de commande de charge (2) et le circuit de dérivation (3) étant agencés séparément, et
le circuit de commande de charge (2) est configuré pour générer et transmettre un signal de commande de charge, de manière à commander le processus de charge du véhicule électrique ;
**caractérisé en ce que** le circuit de dérivation (3) est configuré pour connecter directement la pile de charge au véhicule électrique lorsque le circuit de commande de charge (2) échoue, de manière à contourner le circuit de commande de charge (2) et transmettre le signal de commande de charge généré par la pile de charge pour commander le processus de charge du véhicule électrique,
le circuit de commande de charge (2) comprend une première unité de commande (6) configurée pour émettre le signal de commande de charge selon une sortie de la pile de charge et une demande de charge du véhicule électrique, la pile de charge comprend une seconde unité de commande (7) configurée pour émettre le signal de commande de charge selon une sortie de la pile de charge et une demande de charge du véhicule électrique, le signal de commande de charge généré par le circuit de commande de charge (2) et le signal de commande de charge généré par la pile de charge sont les mêmes,
le module de commande de niveau supérieur (8) est connecté en communication avec chacune des premières unités de commande (6) de manière filaire ou sans fil et configuré pour commander chacune des premières unités de commande (6) et allouer de la puissance correspondante à la première unité de commande (6), et
chacune des unités de commande de dérivation (9) comprend deux extrémités d'entrée et une extrémité de sortie, une extrémité d'entrée étant connectée au module de commande de niveau supérieur (8), et l'autre extrémité d'entrée étant connectée à la première unité de commande (6), le module de commande de niveau supérieur (8) et/ou la première unité de commande (6) commande/commandent la conduction de l'unité de commande de dérivation (9), l'extrémité de sortie de l'unité de commande de dérivation (9) est connectée aux deux extrémités du circuit de dérivation (3) et configurée pour commander l'allumage/l'arrêt du circuit de dérivation (3), lorsque le circuit de commande de charge (2) échoue, la première unité de commande (6) et le module de commande de niveau supérieur (8) sont configurés pour passer au circuit de dérivation (3), de manière à assurer la continuité du processus de charge ; lorsque le circuit de commande de charge (2) est rétabli à la normale, le module de commande de niveau supérieur (8) est d'abord averti pour libérer la commande sur une dérivation, et arrêter le circuit de dérivation partiellement en conduction du module de commande de niveau supérieur (8), puis la remise du signal de commande de charge du véhicule au circuit de commande de charge (2) est effectuée en un cycle, et le circuit de dérivation (3) est arrêté.

2. Système de commande de charge de véhicule électrique selon la revendication 1, **caractérisé en ce que**
chacun des modules de commande de charge (1) comprend en outre :
un premier commutateur de sélection (4) connecté à la pile de charge et configuré pour commander la pile de charge pour qu'elle soit connectée à une extrémité du circuit de dérivation (3) ou une extrémité du circuit de commande de charge (2) ; et
un second commutateur de sélection (5) connecté au véhicule électrique et configuré pour commander le véhicule électrique pour qu'il soit connecté à l'autre extrémité du circuit de dérivation (3) ou l'autre extrémité du circuit de commande de charge (2).

3. Système de commande charge de véhicule électrique selon la revendication 1, **caractérisé en ce que**
la première unité de commande (6) comprend :
une minuterie connectée au véhicule électrique et configurée pour acquérir une forme d'onde MLI et un cycle MLI actuellement reçus par le véhicule ;
une unité de détection configurée pour détecter un flanc descendant de la forme d'onde MLI reçue par le véhicule lorsqu'il y a un besoin de commutation de circuit, et générer un signal de commutation de circuit lorsque le flanc descendant est atteint, de telle sorte que la première unité de commande entre dans un état à commuter ; et
une unité de commutation configurée pour détecter si le cycle MLI actuel reçu par le véhicule s'arrête, et générer un signal d'interruption si le cycle s'arrête, de manière à effectuer la commutation du circuit de commande de charge (2) au circuit de dérivation (3) ou du circuit de dérivation (3) au circuit de commande de charge (2).

4. Système de commande de charge de véhicule électrique selon l'une quelconque des revendications 1 à 4, **caractérisé en ce que**
la défaillance du circuit de commande de charge (2) comprend : un état de travail de la première unité de commande (6) étant anormal, la première unité de commande (6) perdant la communication avec le module de commande de niveau supérieur (8), un état de travail du module de commande de niveau supérieur (8) étant anormal, et le module de commande de niveau supérieur (8) étant incapable de communiquer avec la première unité de commande (6).

5. Système de commande de charge de véhicule électrique selon l'une quelconque des revendications 1 à 4, **caractérisé en ce que**
la pile de charge est une pile de charge CA.

6. Système de commande de charge de véhicule électrique, utilisé pour commander un processus de charge du véhicule électrique selon le système selon l'une quelconque des revendications 1 à 5, comprenant les étapes suivantes :
la génération et la transmission, par un circuit de commande de charge (2), d'un signal de commande de charge, de manière à commander le processus de charge du véhicule électrique ; et
la connexion directe, par un circuit de dérivation (3), de la pile de charge au véhicule électrique lorsque le circuit de commande de charge échoue, de manière à contourner le circuit de commande de charge (2) et transmettre le signal de commande de charge généré par la pile de charge pour commander le processus de charge du véhicule électrique, le circuit de commande de charge (2) et le circuit de dérivation (3) étant agencés séparément,
**caractérisé en ce que** le signal de commande de charge généré par le circuit de commande de charge (2) et le signal de commande de charge généré par la pile de charge sont les mêmes,
le procédé comprenant en outre les étapes suivantes :
la génération, par un module de commande de niveau supérieur (8), d'un signal de conduction de dérivation lorsque le circuit de commande de charge (2) échoue, pour commander le circuit de dérivation (3) pour qu'il soit en conduction, et
la génération, par le circuit de commande de charge (2), d'un signal de conduction de dérivation lorsque le circuit de commande de charge (2) échoue, pour commander le circuit de dérivation (3) pour qu'il soit en conduction, et
l'arrêt du circuit de dérivation partiellement en conduction du module de commande de niveau supérieur (8) lorsque le circuit de commande de charge (2) est rétabli à la normale, puis la remise du signal de commande de charge du véhicule au circuit de commande de charge (2) est effectuée, et le circuit de dérivation (3) est arrêté.

7. Procédé de commande de charge de véhicule électrique selon la revendication 6, **caractérisé en ce que**
lesdites génération et transmission, par un circuit de commande de charge (2), d'un signal de commande de charge, de manière à commander la charge d'un véhicule électrique comprennent l'étape suivante :
l'émission, par le circuit de commande de charge (2), du signal de commande de charge selon une sortie de la pile de charge et une demande de charge du véhicule électrique, pour commander la charge du véhicule électrique.

8. Procédé de commande de charge de véhicule électrique selon la revendication 6, **caractérisé en ce que**
ladite transmission, par le circuit de dérivation (3), du signal de commande de charge généré par la pile de charge comprend l'étape suivante :
l'émission, par la pile de charge, du signal de commande de charge selon une sortie de la pile de charge et une demande de charge du véhicule électrique.
